# EUROPÄISCHE PATENTSCHRIFT

(11) **EP 0 728 303 B1**
(45) Veröffentlichungstag und Bekanntmachung des Hinweises auf die Patenterteilung: **15.03.2000**
(21) Anmeldenummer: 95901315.2
(22) Anmeldetag: 10.11.1994
(51) Int. Cl.: G01N 21/86, G01B 11/30

(54) **VERFAHREN ZUR OPTISCHEN MODIFIKATION VON OBJEKTEN MIT SELBSTAFFINEN ODER FRAKTALEN MUSTERN**
PROCESS FOR THE OPTICAL MODIFICATION OF OBJECTS WITH AUTOAFFINE OR FRACTAL PATTERNS
PROCEDE DE MODIFICATION OPTIQUE D'OBJETS A MOTIFS AUTOAFFINES OU FRACTALS

(30) Priorität: 10.11.1993 DE 4338307
(43) Veröffentlichungstag der Anmeldung: 28.08.1996
(73) Patentinhaber: Birkle, Adelheid, 78337 Öhningen (DE)
(72) Erfinder: Birkle, Gebhard, D-78337 Öhningen (DE)
(74) Vertreter: Mierswa, Klaus
(86) Internationale Anmeldenummer: DE9401321
(87) Internationale Veröffentlichungsnummer: WO9513530

(56) Entgegenhaltungen:
- CA-A- 2 101 707
- DE-A- 3 532 690
- APPLICATIONS OF SURFACE SCIENCE, Bd.18, 1984, AMSTERDAM,NL Seiten 146 - 164 P.PFEIFER 'FRACTAL DIMENSION AS WORKING TOOL FOR SURFACE-ROUGHNESS PROBLEMS' in der Anmeldung erwähnt

## Beschreibung

### Technisches Gebiet:

Die Erfindung betrifft ein Verfahren zur optischen Detektion von Objekten oder Objektströmen, wie ruhende Objekte oder bewegte Objektströme, deren Oberflächen Licht zu reflektieren oder zu streuen imstande sind, und die selbstaffine oder selbstähnliche oder fraktale Muster oder Strukturen auf den Oberflächen oder in sich aufweisen oder bilden oder hervorrufen können, gemäß dem Oberbegriff des Anspruchs 1.

### Stand der Technik:

Selbstähnliche oder selbstaffine oder fraktale Gebilde und Strukturen sind Zeugen eines allgegenwärtigen Strukturtyps, vertreten in den umgebenden Objekten und Abläufen in der Natur. Als klassische selbstähnliche bzw. fraktale Gebilde in geometrisch-mathematischer Veranschaulichung seien die Kochkurve oder das Sierpinskidreieck genannt. Eine Struktur wird exakt selbstähnlich genannt, wenn sie in beliebig kleine Teile zerlegt werden kann, von denen jeder eine kleine Kopie der ganzen Struktur ist, wobei wichtig ist, daß die kleinen Teile aus der ganzen Struktur durch eine Ähnlichkeitstransformation hervorgehen. Dabei sind zwei Objekte ähnlich, wenn sie, abgesehen von ihrer Größe, annähernd dieselbe Form haben; Transformation zwischen den Objekten, die Verknüpfungen von Skalierungen, Rotationen und Translationen umfassen, sind dabei die Ähnlichkeitstransformationen.

Natürliche selbstaffine Strukturen treten in der Umwelt weniger ideal in Erscheinung; sie sind mehr oder weniger stochastisch moduliert und insbesondere ist häufig die definierende Eigenschaft der Skaleninvarianz auf bestimmte Größenbereiche der strukturbildenden Merkmale beschränkt, hier spricht man von selbstaffin bis selbstähnlich. Ebenso können mehrere verschiedene selbstaffine oder fraktale Strukturen überlagert als Multifraktale auftreten. Sowohl für mathematisch-ideale, als auch für natürliche Fraktale wird als Meß- oder Kenngröße u.a. die fraktale Dimension oder Selbstähnlichkeitsdimension (FD) verwendet, die als rationale Zahl auftritt und die ein Gradmesser der Komplexität der Verknüpfung bzw. Variationsbreite zweier Größen ist, wobei die Selbstähnlichkeitsdimension FD einem Potenzgesetz folgt.

In der Qualitäts- und Prozeßkontrolle findet eine meßtechnische Verwendung der Selbstähnlichkeitsdimension bislang kaum Verwendung. Zwar tritt Selbstaffinität bzw. Fraktale in vielen natürlichen Mustern auf, jedoch in einer meßtechnisch gesehen hinderlichen Vielfalt von Phänotypen, so daß die Beurteilung von Bruchflächen, Poren- oder Narbenmustern, Blasen in Schäumen, Faltenanordnungen oder Benetzungsflächen, meist nur nach Augenschein erfolgen kann. Prinzipiell wäre eine derartige Erfassung per Bilddatenverarbeitung mittels Videokamera und Speichermedium möglich, allerdings bei einer sehr spezifischen Systemanpassung und dadurch letztlich uninteressanter Kosten-Nutzen-Relation. Des weiteren verursacht eine Merkmalsüberstrahlung durch Sekundärlicht bei zusammenhängenden Abbildungen von Oberflächen für eine nachfolgende Bilddatenverarbeitung mittels Videokamera auch einen Informationsverlust. Hierfür sind Bruchflächen oder Texturen, die häufig Träger selbstaffiner bis selbstähnlicher Muster sind, sehr störanfällig.

Durch die DE-U1-9301901 ist eine Vorrichtung zur großflächigen optischen Topographiemessung zur Untersuchung diffusreflektierender Oberflächen mittels projizierter Muster auf die Objektoberfläche bekannt geworden. Durch die DE-A1-3532690 ist des weiteren ein Verfahren zur Messung der Oberflächenrauheit von Werkstücken bekannt geworden, bei welchem die Oberfläche mit Licht bestrahlt wird und die Intensitätsverteilung des reflektierten Lichts unter Verwendung eines Wandlers ausgemessen wird und daraus ein Rauheitssignal berechnet wird. Ebenso ist es aus Pfeifer, P. 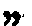 Fractal Dimension As Working Tool For Surface-Roughness Problems", in: Applications of Surface Science 18, 1984, S. 146-164, Amsterdam, bekannt, die fraktale Dimension zur Bestimmung der Rauheit von Oberflächen heranzuziehen.

### Aufgabe der Erfindung:

Der Erfindung liegt die Aufgabe zugrunde, die Oberflächen von Objekten oder Objektströmen, wie ruhende Objekte oder bewegte Objektströme, also auch Prozeßverläufe, optisch zu überwachen, zu erfassen bzw. zu bewerten, um aufgrund der optischen Erfassung von Mustern oder Strukturen Aussagen über die Beschaffenheit des Objektes oder den Objektstrom bzw. den Verlauf des Prozesses zu treffen, sofern derartige Objekte oder Objektströme im untersuchten Bereich Selbstaffinität oder Selbstähnlichkeit oder Fraktale aufweisen. Ebenso liegt der Erfindung die Aufgabe zugrunde, auch eine Geschwindigkeitsbestimmung der Relativbewegung eines bewegten Objektes zur Abbildungs- und Empfangseinrichtung zu ermöglichen.

### Offenbarung der Erfindung und deren Vorteile:

Die Lösung der Aufgabe besteht erfindungsgemäß darin, daß a) das Abbildungsstrahlenbündel als eine Folge von Lichtmustern ausgetastet wird, wobei der Austastung ein Ähnlichkeitstransformations-Algorithmus zugrundegelegt wird dergestalt, daß die Verknüpfung der einzelnen Lichtmuster untereinander räumlich und/oder zeitlich eine Skalierung oder Rotation oder Translation von selbstaffin oder selbstähnlich oder fraktal ist und wenigstens zwei Variable eingerichtet werden, b) innerhalb einer jeden Stufe der Skalierung oder Rotation oder Translation erfolgt innerhalb eines Speichers eine Speicherung und Aktualisierung der sich aus der Austastung über die Variablen ergebenden Detektionsereignisse in Gestalt von Wertepaaren, c) über den Variablen der Skalierung oder Rotation oder Translation erfolgt mittels deren Logarithmus die Berechnung der Skalierungs- oder Rotations- oder Translationsfunktion (zum Beispiel ergeben bei zugrundegelegter Skalierung die Wertepaare eine lineare Funktion bei vorhandener Selbstähnlichkeit der Objekte oder Objektströme).

Eine Vorrichtung zur Durchführung des Verfahrens ist gekennzeichnet durch a) eine optische Einrichtung, die das Abbildungsstrahlenbündel als eine Folge von Lichtmustern auszutasten imstande ist, wobei der Austastung ein Ähnlichkeitstransformations-Algorithmus zugrundeliegt dergestalt, daß die Verknüpfung der einzelnen Lichtmuster untereinander räumlich und/oder zeitlich eine Skalierung oder Rotation oder Translation von selbstaffin oder selbstähnlich oder fraktal ist und wenigstens zwei Variable eingerichtet werden, b) innerhalb einer jeden Stufe der Skalierung oder Rotation oder Translation erfolgt innerhalb eines Speichers eine Speicherung und Aktualisierung der sich aus der Austastung über die Variablen ergebenden Detektionsereignisse in Gestalt von Wertepaaren, c) über den Variablen der Skalierung oder Rotation oder Translation erfolgt mittels deren Logarithmus die Berechnung der Skalierungsoder Rotations- oder Translationsfunktion, (zum Beispiel ergeben bei zugrundegelegter Skalierung die Wertepaare eine lineare Funktion bei vorhandener Selbstähnlichkeit der Objekte oder Objektströme). Weitere vorteilhafte Ausgestaltungen der Erfindung sind in den übrigen Unteransprüchen gekennzeichnet.

In vorteilhafter Weise kann auch das Belichtungsstrahlenbündel mit einer Folge von Lichtmustern moduliert werden, wobei der Modulation ein Ähnlichkeitstransformations-Algorithmus zugrundegelegt wird dergestalt, daß die Verknüpfung der einzelnen Lichtmuster untereinander räumlich und/oder zeitlich eine Skalierung oder Rotation oder Translation von selbstaffin oder selbstähnlich oder fraktal ist und wenigstens zwei Variable eingerichtet werden, wobei die Modulierung des Belichtungsstrahlenbündels, die Austastung des Abbildungsstrahlenbündels sowie die Ansteuerung des Speichers zur Aufnahme der Wertepaare in gesteuerter Weise mittels einer Steuerung aufeinander abgestimmt werden.

Bevorzugt werden bei der Austastung des Abbildungsstrahlenbündels und/oder Modulierung des Belichtungsstrahlenbündels die Lichtmuster der erzeugten Folgen skaliert und umfassen eine Gruppe von Belichtungsflächen (Lichtmusterelemente), die hinsichtlich mindestens einer gemeinsamen Eigenschaft, nämlich räumlich und/oder zeitlich, eine Skalierung von selbstaffinen oder exakt selbstähnlichen oder fraktalen Lichtmustern in der Ebene bilden, wenn ein selbstaffines oder exakt selbstähnliches oder fraktakles Muster oder eine selbstaffine oder exakt selbstähnliche oder fraktale Struktur als Konstante erkannt werden soll. Es werden soviel Speicher-Kanäle gebildet, wie Variable gewählt worden bzw. vorhanden sind. Weitere vorteilhafte Ausgestaltungen der Erfindung sind in den Unteransprüchen gekennzeichnet.

Die Erfindung besitzt den Vorteil, daß mittels derselben Prozesse überwacht werden oder Muster und Strukturen erkannt werden können, um auf den zugrundeliegenden selbstähnlichen Prozeß oder das zugrunde liegende Objekt, welches das betreffende selbstähnliche Muster oder die betreffende selbstähnliche Struktur trägt, zu schließen. Voraussetzung ist, daß der Prozeß oder das Objekt Selbstähnlichkeit bzw. Selbstaffinität aufweist oder ein Fraktal ist, weil selbstähnliche bzw. fraktale Strukturen Indikatoren für die sie erzeugenden Prozesse sind. Da Selbstaffinität in vielen Prozessen und natürlichen Mustern auftritt, ist eine Beurteilung des Prozesses bzw. des Objektes möglich, so daß durch das Verfahren, welches quasi ein Erwartungsbild erzeugt, eine industrielle Prüfpraxis oder Prozeßkontrolle mit FD-Bestimmung zur Verfügung steht, mit der Bruchflächen, Poren- und Narbenmuster, Faltenanordnungen oder Benetzungsflächen oder Blasenbildungen in Schäumen und Flüssigkeiten gemäß des Erwartungsbildes überwacht werden können. Der Kern der Erfindung liegt darin, zur Detektion von selbstaffinen, selbstähnlichen oder fraktalen Mustern oder Strukturen von Objekten oder Objektströmen diese mittels eines von selbstaffin oder selbstähnlich bis fraktal strukturierten Lichtmusters zu beleuchten und anzuregen und daraus die FD-Funktion des Objektes zu bestimmen.

Die Begriffe "Skalierung", "Rotation" und "Translation" sind mathematisch zu verstehen. Im folgenden wird als Ähnlichkeitstransformations-Algorithmus hauptsächlich eine Skalierung zugrundegelegt, wobei gleichermaßen Rotations- oder Translationsfunktionen als Ähnlichkeitstransformations-Algorithmus zugrundegelegt werden können.

Bei einer Skalierung werden zum Beispiel in einem Musterbild verschieden große Elemente nach wenigstens einem Parameter, beispielsweise die Größe, ausgezählt, wobei der unterschiedlichen Größe wenigstens zwei Variablen zugrunde liegen, die in der x-y-Ebene oder in der x-y-Ebene und der Zeitachse oder in der x- oder der y-Ebene und der Zeitachse liegen können; das bedeutet, daß der Parameter oder die Variable "Größe" skaliert und normiert wird. Als Ergebnis können Wertepaare aufgezeichnet werden, die eine Aussage über die Häufigkeit oder die Belegungsdichte der unterschiedlich großen Elemente, bezogen auf ein Raster (Normgröße), erlauben. Bei nur einem Abtastpunkt können die Anregungsmuster bzw. -punkte auch nur auf der Zeitachse liegen.

In vorteilhafter Weise werden somit die Skalierungs- oder Rotations- oder Translationsoperationen auf der Sensorseite, das ist auf der Seite der Beleuchtung und Abbildung, geleistet, weshalb man gegenüber der Bildgröße unabhängig ist und gegenüber einer Videoaufbereitung nur ein reduziertes Datenvolumen benötigt.

Zwecks optimaler Selektivität bei der Detektion optischer Überlagerungen von Musterelementen und Objektsmerkmalen kann es fallweise zweckmäßig sein, Anregungs- und Empfangsseite zu strukturieren, z.B. zwecks Vermeidung von Überstrahlung an Bruchflächen, in allgemeiner Weise um Störungen zu unterdrücken. Bestimmte Skalierungsparameter können eine solche kanalbildende gegenseitige Zuordnung erfordern, zum Beispiel bei der Skalierung über Polarisationsgrade oder eine Verfärbungsskala (Kristallverfärbungen bei Wassereinlagerung in das Kristallgitter).

Bei den gesuchten Merkmalsanordnungen handelt es sich meist um Zufallsgebilde, was je nach Skalierungseigenschaft hinsichtlich der mehr oder weniger vollkommenen Überdeckung von Musterelementen und Objektmerkmalen eine rechnerische Berücksichtigung erfordern kann. Unempfindlich ist diesbezüglich die Auszählung von Merkmalsüberschneidungen mit skalierten Rasterflächen, Bestimmung der Box-Dimension.

### Kurzbeschreibung der Zeichnung, in der zeigen:

- Figur 1: eine Darstellung des Prinzips des Verfahrens
- Figur 2: eine prinzipielle Darstellung eines strukturspezifischen Empfangs- und Auswertesystems, bei der das Abbildungsstrahlenbündel algorithmusbezogen gesteuert und optisch ausgetastet wird
- Figur 3: eine weitere prinzipielle Darstellung eines strukturspezifischen Empfangs- und Auswertesystems, bei der das Abbildungsstrahlenbündel algorithmusbezogen gesteuert und optisch ausgetastet wird
- Figur 4: einen Schnitt durch eine Vorrichtung zur sequentiellen Erzeugung von Lichtmustern zur Belichtung
- Figur 5: eine um 90 Grad gedrehte Ansicht der Figur 4
- Figur 6: A, B, C Teilansichten entsprechend den Schnitten "A", "B", ^{"}C" in Figur 5
- Figur 7: eine Teilansicht von "D" in Figur 5
- Figur 8: einen Längsschnitt (A-A) durch eine weitere Vorrichtung zur sequentiellen Erzeugung von Belichtungslichtmustern
- Figur 9: einen Schnitt längs der Linie B-B in Figur 8
- Figur 10: ein Beispiel eines linearen Belichtungslichtmusters
- Figur 11: ein Beispiel eines kreisförmigen Belichtungslichtmusters
- Figur 12: eine Bauvariante zu der Vorrichtung der Figur 8
- Figur 13: die zugehörige Konfiguration von Objekt, Belichtungsmuster, Sender- und Empfängerelemente in aufgefalteter Darstellung
- Figur 14: einen Längsschnitt durch eine Bauvariante für eine flächige Austastung mit vergleichsweise breiter Abtastspur
- Figur 15: einen Schnitt längs der Linie B-B in Figur 15
- Figur 16: a, b, c, d eine auseinandergezogene Darstellung der Belichtung, der Objektoberfläche, des Empfangselementearrays sowie das Beispiel des resultierenden Austastrasters und
- Figur 17: eine weitere Prinzipdarstellung des Verfahrens.

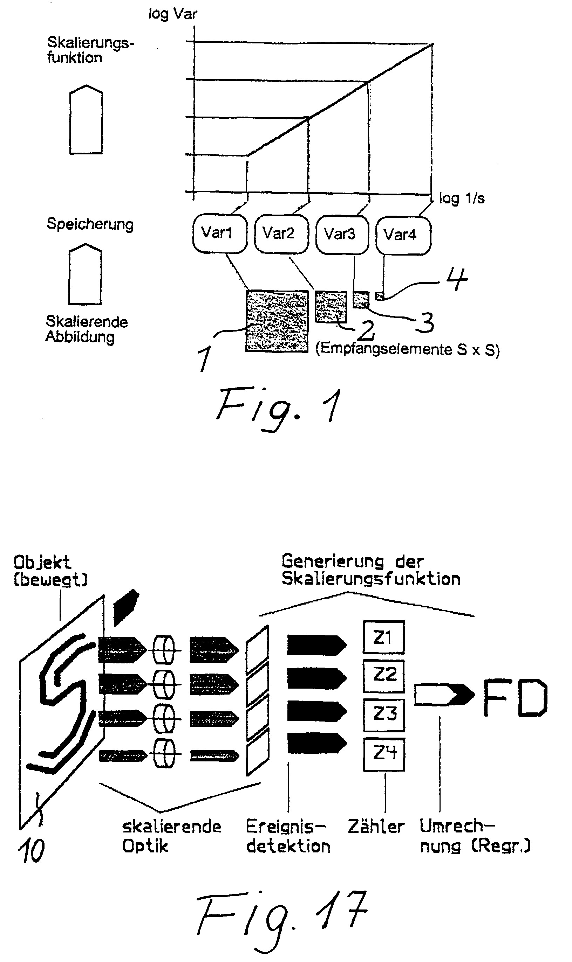

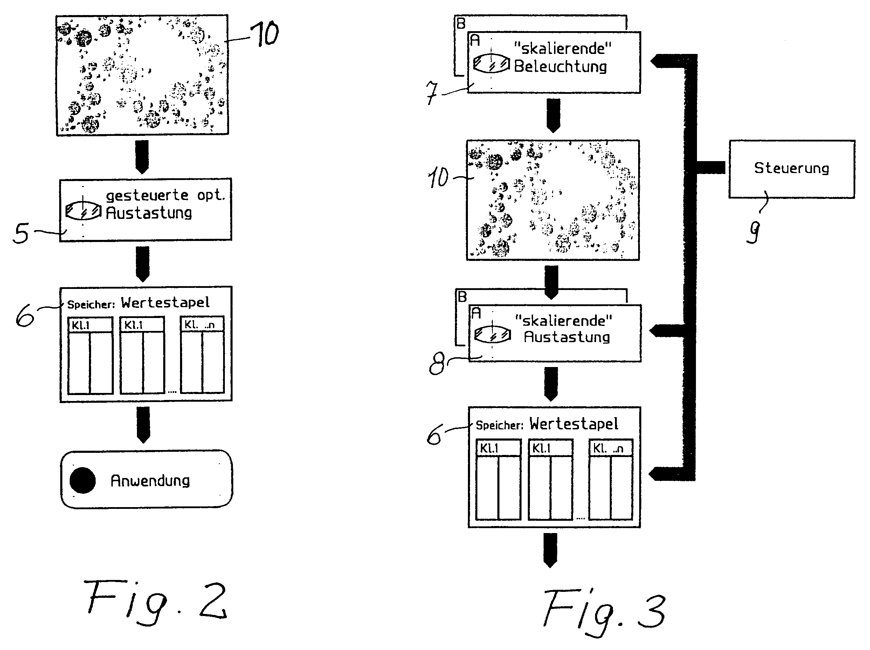

Anhand der Figuren 1 bis 3 ist das prinzipielle Verfahren erläutert. Ein Objekt 10 bzw. Objektoberfläche wird mittels einer Lichtquelle beleuchtet, wobei bei einfach gelagerten Detektionen entweder nur das Abbildungsstrahlenbündel (Figuren 1 und 2) oder bei komplexeren das Abbildungslichtbündel und das Belichtungsstrahlenbündel (Figur 3) algorithmusbezogen als eine Folge von Lichtmustern ausgetastet oder beleuchtet und ausgetastet werden zur Detektion von klassenspezifischen Kontrasten des Objektes 10. Die Verknüpfung der einzelnen Lichtmuster untereinander erfolgt räumlich und/oder zeitlich als Skalierung von selbstaffin oder selbstähnlich bis fraktal. In Figur 1 sind beispielsweise vier Variable Var₁, Var₂,Var₃,Var₄ eingerichtet, die den unterschiedlich großen Lichtmustern entsprechen und hier unterschiedlich große quadratische Empfangselemente 1,2,3,4,SxS, sind, deren Größe SxS nach dem gewählten Ähnlichkeitstransformations-Algorithmus untereinander zusammenhängen. Innerhalb einer jeden Stufe der Skalierung erfolgt innerhalb eines Speichers eine Speicherung und Aktualisierung der sich aus der Austastung über die Variablen ergebenden Detektionsereignisse in Gestalt von Wertepaaren. Über den Variablen der Skalierung erfolgt mittels deren Logarithmus die Berechnung der Skalierungsfunktion, wobei die Wertepaare bei zugrundeliegender Selbstaffinität der gesuchten Muster oder Strukturen des Objekts oder des Objektstromes eine lineare Funktion, das ist die gesuchte Skalierungsfunktion, ergeben. Diese Funktion bedeutet die Auftragung des Terms log(Varₙ) über dem Term log(1/S) bei Normierung bzw. die Auftragung des Terms log(S). Wesentlich ist, daß eine Logarithmierung nicht rechenseitig oder softwareseitig erfolgt, sondern die Logarithmierung verfahrensimmanent sich aufgrund des Ähnlichkeitstransformations-Algorithmus und aus der Tatsache ergibt, daß die gesuchten Muster oder Strukturen selbstähnlich oder selbstaffin oder fraktal sind.

In Figur 17 ist eine weitere Prinzipdarstellung der Architektur des Verfahrens gezeigt. Ein bewegtes Objekt 10 wird beleuchtet und das Abbildungslichtbündel und/oder das Belichtungsstrahlenbündel algorithmusbezogen mittels einer skalierenden Optik als eine Folge von Lichtmustern ausgetastet. Die Verknüpfung der Lichtmuster und somit die Ereignisdetektion erfolgt mittels der Zähler Z1-Z2-Z3-Z4, deren Auswertung die fraktale Dimension FD ergibt.

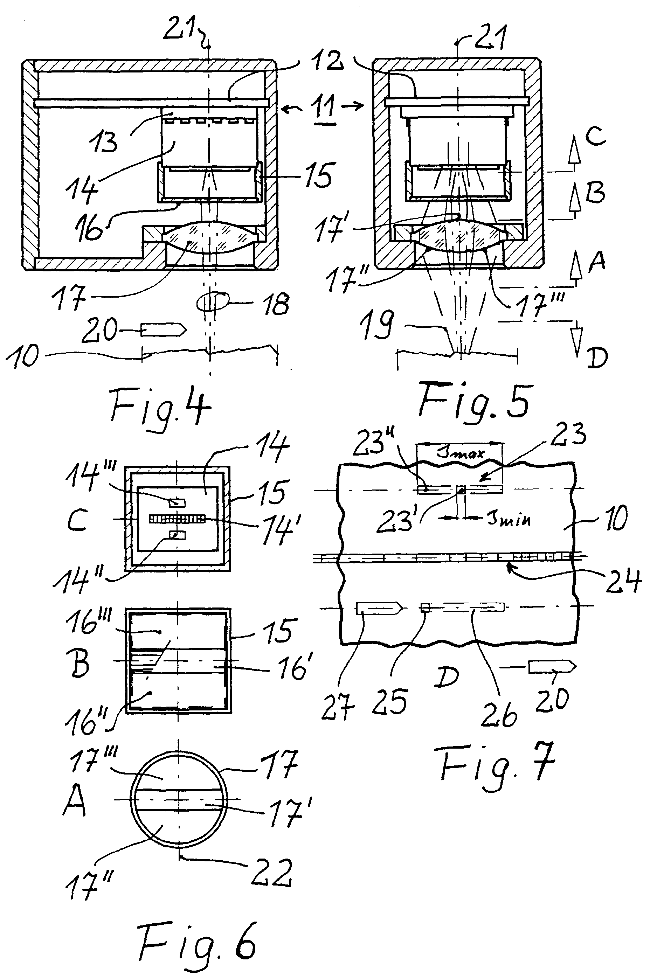

In den Figuren 4 bis 7 ist eine technische Gestaltung eines Sensors zur sequentiellen Erzeugung von Lichtmustern zur Belichtung einer Objektoberfläche 10 dargestellt. Das Funktionsprinzip ist eine Klassenbildung von geometrischen Kriterien mittels Belichtungsmustern auf dem Objekt und - hinsichtlich der Objektgeschwindigkeit - eine Durchstimmung der Abtastfrequenz mit einem Belichtungsmuster bei simultaner Überwachung des Ereignisrauschens auf ein Ereignisminimum. Die Belichtungsmuster resultieren aus der Kombination von Lichtmusterprojektion und Belichtungszeit.

Ein Sensor ist in den zwei Hauptschnitten durch die optische Achse 21 dargestellt. Innerhalb eines Gehäuses 11 ist auf einer Leiterplatte 12 ein Sockel 13 für ein Sender- und Empfängerelement 14 angeordnet, welches einen Tubus 15 trägt, der mittels eines Fenster- und Linsenelementes 16 abgeschlossen ist. Unterhalb dieses Fenster- und Linsenelementes 16 ist eine multifokale Belichtungs-Abbildungslinse 17 montiert; die Lichtbündelung auf das Objekt 10 erfolgt durch die Kombination von Fenster- und Linsenelementes 16 und Belichtungs-Abbildungslinse 17. Diese weist einen zentralen Bereich 17' einer speziellen Linsenanformung zur Fokussierung des Belichtungsstrahlenbündels 18 auf, der von einem Bereich 17'' der speziellen Linsenanformung zur Fokussierung des Sammelstrahlenbündels 19 beiderseits von 17' umgeben ist, wobei der Bereich 17'' auch torusförmig um den Bereich 17' ausgeführt sein kann.

Die Teilsichtdarstellung der Figur 6 C auf das Sender- und Empfängerelement 14 veranschaulicht die geometrische Anordnung von Sender- und Empfangsflächen eines Halbleiterbausteins des Sender- und Empfängerelement 14: Beidseits zu einer Reihenanordnung von Senderflächen 14' auf der horizontalen Mittenlinie sind, symmetrisch auf der vertikalen Mittenlinie 22 liegend, zwei Empfangsflächen 14'' 14 ''' angeordnet.

Gemäß der Figuren 6 B und A erfolgt die Bündelung des Lichtes auf das Objekt 10 mittels einer Kombination von Optikelementen bzw. -bereichen 16' und 17' der multifokalen Belichtungs-Abbildungslinse 17, die beispielsweise im Prinzip eine Zylinderlinse ist, ausgeführt als hologra-phischoptisches Element, innerhalb des Bereiches 17', der einen sphärischen Linsenbereich mit rechteckigem Umriß der Breite b (Figur 6 A) darstellt. Vom Objekt 10 reflektiertes bzw. gestreutes Licht fokusiert über die beiden außenliegenden Linsenabschnitte 17'' und 17''' auf den Empfangsflächen 14'', 14''' des Sender- und Empfängerelements 14. Figur 6 B zeigt die Draufsicht auf das Fenster- und Linsenelement 16, wobei der Bereich 16' einen rechteckigen Umriß der Breite b, wie der Bereich 17' der Belichtungs-Abbildungslinse 17, aufweist, seitlich umgeben von den seitlichen Bereichen 16'', 16'''. Mittels der Konfiguration von Haiblei-terelementen 14' und 14'' und deren optischer Zuordnung auf die Objektoberfläche 10 erfolgen in wechselnder Betriebsweise Strukturdaten- und Geschwindigkeitsbestimmungen, letztere als Bezugsgröße für erstere.

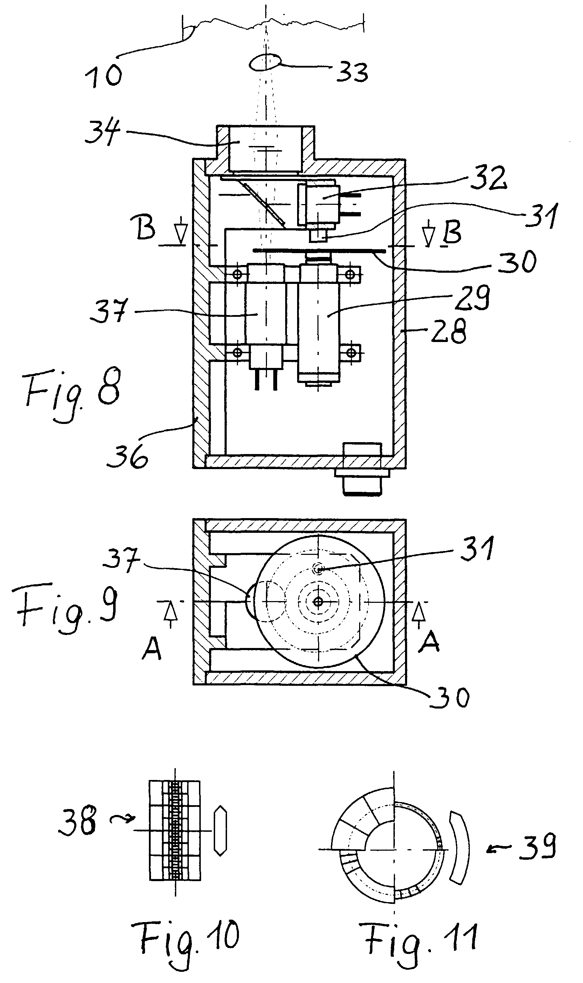

Zur Strukturdatenbestimmung am Beispiel der Rasterüberdeckung dient die Darstellung in Figur 7: Eine programmgesteuerte Gruppierung und Aktivierung der Senderflächen 14' erzeugt in zeitlicher Folge auf dem bewegten Objekt 10 eine Skala von Belichtungsflächen 23, gestaffelt nach der Größe, nämlich als kleinste 23' der Länge sₘᵢₙ und als größte 23'' der Länge sₘₐₓ, sowie der Dauer. Dabei korrelieren Größenstaffelung und Belichtungsdauer dergestalt, daß über die Objektfläche 10 ein leiterförmiges Abtastraster 24 gelegt wird, dessen Sprossenweiten und - Anzahl definierterweise iteriert. Empfangsseitig ist mit diesem Belichtungsprogramm eine Klassenzuordnung synchronisiert, zum Beispiel mittels einer Partialüberdeckung der jeweiligen Rasterfläche mit dem Muster.

Zur Geschwindigkeitsbestimmung erfolgt senderseitig eine wiederholte, jeweils positionsversetzte Aktivierung einer Senderflächenkonfiguration, im einfachsten Fall z.B. nur eine Senderfläche. Das Bild 25 hiervon tastet das Objekt im Fensterbereich 26 mit einer resultierenden Relatigeschwindigkeit (aus der Abtastgeschwindigkeit und dem Fensterbereich 26) ab - bei senderseitiger Durchstimmung der absoluten Abtastgeschwindigkeit 27. Mit Richtungs- und Betragsgleichheit der Geschwindigkeiten 20 und 27 nimmt das "Ereignisrauschen" einen Minimalwert an, Signalflanken von Ereignissen flachen in Annäherung an dieses Stadium ab. Auswerteseitig wird dieses Gleichheitsstadium in geeigneter Weise angesteuert, zum Beispiel mittels Rückkopplung zur Durchstimmung, und detektiert: Die Relativgeschwindigkeit von Objektoberfläche zu Sensor bestimmt sich dann aus der bekannten, aktuellen Abtastgeschwindigkeit 27.

Mit dieser Einrichtung erfolgt bedarfsweise auch die Ereignisauszählung über Größenklassen von Merkmalen, wobei der senderseitig aktuelle und bekannte Wert einer Belichtungflächengröße auswerteseitige Filter steuert, z. B. Zeiffensterdimensionierung für abgeschlossene Ereignisse. Dergestalt wird auch das optische Ereignisrauschen von Bruchflächen einer Untersuchung auf Skaleninvarianz zugänglich, wobei es zweckmäßig sein kann, die beiden Empfangselemente klassenbildend zu trennen.

Zur größenabhängigen Geschwindigkeitsbestimmung dient eine verschachtelte Durchstimmung, wozu mittels der Sensorsteuerung zusätzlich über eine Gruppe verschieden großer Senderflächenaggregate iteriert wird.

Eine Sensorik der vorbeschriebenen Art ist bezüglich Dimensionierung und Betriebsdaten auf Anwendungen mit jeweils dem zu erwartendem Muster eingerichtet. So erfordern Linienabtastung und sequentielles Belichtungsprogramm entsprechende Abtastumfänge, um zuverlässige Strukturdaten zu erhalten; die zu erfassenden Mustervariationen müssen natürlich auf einer Abtastspur auftreten.

Prinzipiell ist man nicht an die maßstabsgetreue Abbildung von Senderelementen oder an eine Rechteckstruktur des Belichtungsmusters gebunden. Mittels einer Transformationsoptik können geeignete Anpassungen erfolgen. Sender- und Empfängerelemente können auch in Durchlichtbauweise auf gemeinsamer optischer Achse angeordnet (Schrankenaufbau) oder als Endflächen eines Lichtleitkabels oder lichtleitenden Adapterteils ausgeführt sein. Empfangsseitig ist die Anordnung eines oder mehrerer Flächenelemente möglich, wobei diese integrierenderweise ein oder mehrere Signale mit jeweils eigenem Auswertekanal generieren können. Senderseitig können Flächenlemente unterschiedlicher Länge ( 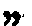 längenskaliert") angeordnet sein.

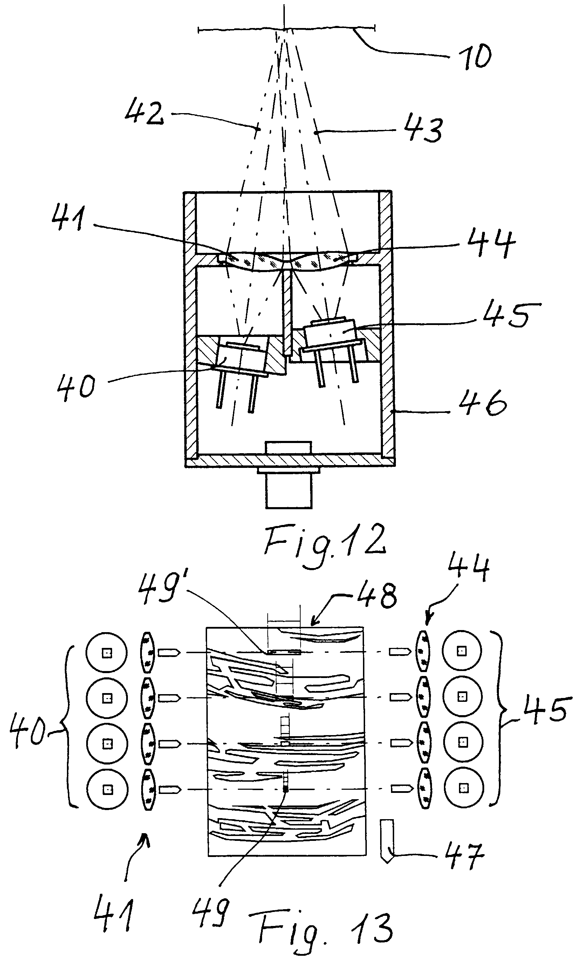

Ein weiteres technisches Ausführungsbeispiel ist in den Figuren 8 bis 11 veranschaulicht. Innerhalb eines Gehäuses 28 ist ein Antriebsmotor 29 angeordnet, der einen rotierenden Hologrammträger 30 antreibt, der zwei kreisringförmige Funktionsbereiche (Figur 9), vorzugsweise in Form von Durchbrechungen, aufweist, nämlich einen Außenring mit Belichtungsprogramm zum Objekt und einen Innenring zur synchronen Auswertungssteuerung. Wenigstens ein Funktionsbereich dient zur Erzeugung eines skalierten Belichtungsstrahlenbündels und wenigstens ein Funktionsbereich zur Erzeugung eines skalierten Abbildungsstrahlenbündel. Eine Fotoschranke 31 dient zur Abtastung der Steuerungsgröße; eine Empfangsdiode 32 dient zum Empfang des gestreuten bzw. reflektierten Lichts vom Objekt 10. Mittels einer Lichtquelle 37, zum Beispiel ein Diodenlaser, wird ein Belichtungsstrahlenbündel 33 erzeugt, welches durch eine Belichtungs- und Sammeloptik 34 auf das Objekt 10 füllt und von dort auf einen Lichtteilerspiegel 35 reflektiert bzw. gestreut wird, der das Licht auf die Empfangsdiode 32 leitet. Die Aggregate sind an einem Gehäusedeckel 36 des Gehäuses 28 geeignet befestigt.

Bei quasi unbewegtem Objekt 10 wird aufder Objektoberfläche mittels eines rotierenden Hologramms des Hologrammträgers 30 das Belichtungsmuster erzeugt (zum Beispiel Belichtungsflächenvariation und -bewegung), wobei in Figur 10 ein lineares Belichtungsmuster 38 und in Figur 11 ein kreisförmiges Belichtungsmuster 39 dargestellt sind. Die Steuerungsgröße für die darauf bezogene Signalauswertung wird synchron vom rotierenden Hologrammträger-Innenring, der als Optikelement wirkt, abgelesen.

Zur Erzeugung von parallelen Belichtungsmustern, in der Aggregate von Skalierungs-Tasteinrichtungen in Reihenanordnung verwendet werden, zeigt Figur 12 eine Bauvariante in einer schematisierten Schnittdarstellung quer zur Reihe; die Abtastbewegung verläuft dabei senkrecht zur Zeichenfläche. Innerhalb eines Gehäuses 46 ist ein Lichtquellenarray 40 mit einzel ansteuerbaren Senderelementen zeilenförmig, das ist senkrecht zur Zeichenfläche, angeordnet. Mittels einer Belichtungsoptik 41 wird ein Belichtungsstrahlengang 42 in Form von Lichtmustern auf die Oberfläche eines Objektes 10 geworfen und von dort als Abbildungs- bzw. Empfangsstrahlengang 43 reflektiert bzw. gestreut und über eine Abbildungs-Empfangsoptik 44 auf Empfängerelemente 45 geleitet, die zum Beispiel Photodioden sind, die zeilenförmig, das ist senkrecht zur Zeichenfläche, angeordnet sind; der Sensor ist in einem Gehäuse 46 angeordnet. Vorteilhaft verdichtet ein Parallelbetrieb der Elementepaare die Datenerfassung, wobei mittels gespreizter Lichtbalkenanordnung wechselseitige Störstrahlung verhindert ist.

Hierzu schematisiert die Figur 13 die Konfiguration von Objekt 10, Belichtungsmuster, Sender- und Empfängerelemente 40, 45 in aufgefalteter Darstellung. Die Objektoberfläche 10 mit einem Streifenmuster bewege sich entsprechend dem Richtungspfeil 47; parallel hierzu angeordnet sind die Senderelemente des Lichtquellenarrays 40. Ein resultierendes Belichtungsmuster 48 wird von horizontal angeordneten, balkenförmigen Lichtflächen 49, 49' gestaffelter Länge erzeugt; der Abbildungs- bzw. Empfangsstrahlengang 43 wird über die Reihe der Abbildungs-Empfangsoptik 44 auf die Reihe der Empfängerelemente 45 geleitet.

In den Figuren 12 und 13 ist die Optikausführung zwecks exakter (entzerrter) Belichtung und Abbildung nicht besonders ausgeführt, was mittels Blenden, asphärischen Komponenten oder Formgebung der Sender- bzw. Empfangsflächen bewerkstelligt werden kann. Die Empfangsoptiken überfassen in ausreichendem Maße jeweils eine Lichtbalkenkontur 49, 49'. Zwecks Strukturdatendetektion sieht die Sensorsteuerung dieses Beispiels vor, daß bei senderseitigem Konstantlicht, empfänger- bzw. auswerteseitig eine gestufte Ladungsintegration erfolgt, und zwar in konstanter Relation zur Objektgeschwindigkeit 47. Das Belichtungsmuster 48 resultiert im Beispiel aus vier sich überlagernden, leiterförmigen Einzelrastern verschiedener Abmessung. Dem kleinsten Lichtbalken 49 entspricht dabei die höchste Austastfrequenz.

In dieser Struktur kommen auch mehrere Belichtungsmuster bzw. klassenbildende Muster zugleich auf ein Objekt zur Anwendung, z.B. ein Überdeckungsraster, wie 48, kombiniert mit einer Fensterskala gestufter Polarisationsrichtungen, wobei jeweils sender- und empfängerseitig Herzu Polarisator und Analysator angeordnet sein können. Ebenso enthält dieses Konzept die Kombination von Richtungs- oder Farbklassen.

Mittels Kombination solch objektnah-selektiver Klassenbildung und hierzu vorkonstruierten Mustern erfolgen Objektkodierungen, die erschwert nachahmbar oder entzifferbar sind. Eine weitere Variante sieht vor, mittels einer derartigen Sensorkonfiguration natürliche Muster auszutasten und die gewonnenen Strukturdaten auf dem Musterträger zu dokumentieren.

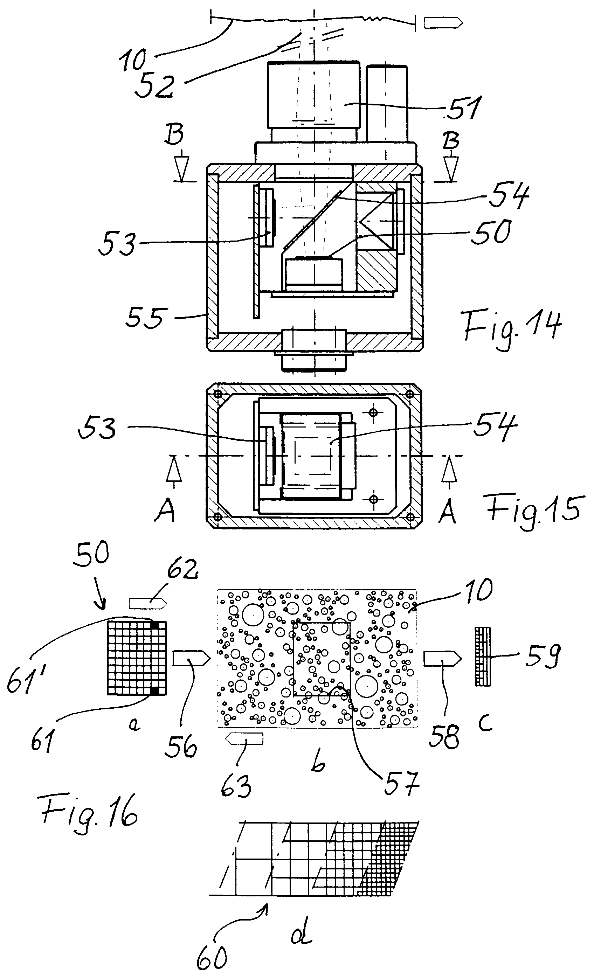

Der in den Figuren 14 und 15 gezeigte Sensor dient der flächigen Austastung und bezweckt eine vergleichsweise breitere Abtastspur als es mit den beschriebenen Beispielen realisiert ist. Das Belichtungsmuster wird durch Gruppierung längenskalierter Empfangselemente in mehreren parallelen Zeilen bei ebenfalls gestaffelten Integrationszeiten erzeugt.

Innerhalb eines Gehäuses 55 ist ein Senderbaustein 50 mit matrixförmiger Anordnung von Senderelementen (Figur 16a) angeordnet, wobei ein motorisch angetriebenes Zoom-Objektiv 51 die System-Anpassung an einen bestimmten Größenbereich (Figur 16 b) bezweckt, erforderlichenfalls mittels Stufenausgleich. Innerhalb des Belichtungs- und Abbildungsstrahlenganges 52 ist ein Lichtteiler 54 angeordnet, der das Abbildungsstrahlenbündel auf einen Empfangsbaustein 53 umlenkt.

Hauptsächlich zum Zweck der Geschwindigkeitsbestimmung ist die Lichtsendefläche des Senderbausteins 50 in einezelne Senderelemente Figur 16a gerastert. Bei ungleichförmiger Objektgeschwindigkeit in einem Musterausschnitt 57, Figur 16b, durchläuft die Aktivierung eines oder mehrerer Senderelemente 61, 61' mehrere Tastspuren und liefert somit eine effektiv anzusetzende Geschwindigkeit. Als Empfängerelement sei die Gesamtheit der Empfangselemente 59 des Empfangselementearrays 59 angenommen. Die Bewegung der Belichtungskonfiguration wird durch die Belichtungsoptik 56 um 180 Grad gedreht zwecks Geschwindigkeitsbestimmung; mittels der Abbildungsoptik 58 wird der Abbildungsstrahlengang auf das Empfangselementearray 59, Figur 16c, geleitet. Das resultierende Austastraster 60 ist in Figur 16d gezeigt. Mittels 63 ist die Bewegung der Belichtungskonfiguration zwecks Geschwindigkeitsbestimmung gekennzeichnet.

Sequentielle oder gespreizte Erzeugung von Belichtungsmustern verhindern bedarfsweise störende Überstrahlung, die Kombination mehrerer klassenbildender Belichtungsmuster erweitert die Anwendung auf komplexe Strukturen oder als Verschlüsselungsinstrument in Verbindung mit vorkonstruierten oder natürlichen Strukturen. Damit ist u.a. für laufendes Gut ein Geschwindigkeitssensor geschaffen, der vorteilhaft auf bestimmte Strukturmerkmale eingerichtet bzw. eingestellt werden kann.

Die Merkmalskontrastierung erfolgt mittels klassischen Varianten der Anordnung von Lichteinfall und Abtastung, Hell- bzw. Dunkelfelddarstellung, Durch- bzw. Auflicht. So erfolgt z.B. die Kontrastierung von prüfkritischen Merkmalen einer Glasur im Auflicht, von schattenbildenden Poren im seitlichen Licht, von beschichteten Pillen, vorzugsweise der Größe 1-4 mm, oder von Suspen-sionen im Durchlicht. Prüfobjekte bewegen sich dabei relativ zum Sensor-abtastfleck mit konstaner Geschwindigkeit bei gerader-, kreis- oder zacken-förmiger Abtastspur. Als 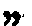 mustererkennende Lichtschranke" ist diese Technik treffend charakterisiert. Die abstrakten Kriterien der fraktalen Dimension und der Skalierungs-funktion, die vom Struktursensor primär detektiert werden, werden appli-kationsweise in prüfkritischer Sicht interpretiert. Dabei handelt es sich um Kriterien wie Prozeßkonstanz, Toleranzeinhaltung, Entwicklungstendenz von Kriterien, klassengleich erscheinender Ensembles, Homogenität, Gleichförmigkeit von Zonen, Randentmischungen, relative Größenverteilung.

Für die Nahrungsmittelindustrie werden beispielsweise folgende möglichen Applikationen des Struktursensors genannt:

| Prozeß: | | Kriterien: |
|---|---|---|
| Zerstückeln, Trennen, | | Ganzheit, frei von Bruch oder Schliff |
| Mahlen, Reiben | | relative Größenverteilung, Vermetzung |
| Aufweichen, Rühren | | Auflösung von Klumpen bzw.Fraktionen |
| Mischen | | Komponentenverteilung |
| Backen | - Schnittfläche | Poren, Körner |
| | - Oberfläche | Narben, Blasen, Glasur |
| Rösten, Trocknen | | tolerierte Strukturvariation, Falten |
| Sortieren | | Ensembles gleicher Erscheinung |
| Reifung | | Oberflächenvariation |
| Gären | | Blasenentwicklung, Fleckenbildung |
| Gerinnen | | Phasenübergang, Cluster, Flocken |
| Eindickung - Platten, Würfel | | Oberflächenvariation je nach Objekt |
| Verfestigung durch Druck | | Homogenität |
| Beschichtung | | Flecken |
| Stoffzuführung | | Schädlingsbefall, Fleckenmuster und Feuchtigkeit |

### Gewerbliche Anwendbarkeit:

Die Erfindung ist insbesondere anwendbar zur Detektion von Merkmalen von Objekten mit dichter, stochastisch gestreuter Merkmalsanordnung, z.B. an laufendem Gut. Anwendungen sind in der Nahrungsmittelindustrie, Medizin-, Umwelt-, Bau-, Sinter- oder Energietechnik gegeben. Beispielsweise können in der Nahrungsmittelindustrie Granulate, wie Körner, Flocken, Kristalle, Ausfällungen, Schliff, Mahlgut, auf stofftypische Zufallsanordnungen untersucht werden. Je nach Größen- und Formspektrum, spezifisches Gewicht, Rauhigkeit, Feuchtigkeit, Plastizität, Elastizität, Oberflächenspannung, Glanz, Farbe und Mischung usw. stellen sich Erscheinungsbilder ein, die abhängig sind von Prozeßparametern, wie Druck, Temperatur oder Fremdstoffanteilen. In verfestigter Form bilden diese stoff- und prozeßtypische Gefüge, die in der Regel durch den Verfestigungsprozeß, wie Pressen, Trocknen, Backen, Kleben, Sintern, Entzug oder Beifügung einer Komponente, modifiziert sind. Der Begriff Granulatstruktur erfaßt auch Erscheinungen, die primär nicht von kornförmigen Substanzen verursacht sind, wie Porenfelder, Blasenbildung, Faserigkeit, Welligkeit, Fleckenmuster.

### Liste der Bezugszeichen:

- 1, 2, 3, 4: Lichtmuster in Form von Empfangselementen
- 5: skalierende gesteuerte optische Austastung des Abbildungsstrahlenbündels
- 6: Speicher
- 7: skalierende Beleuchtung des Belichtungsstrahlenbündels
- 8: skalierende Austastung des Abbildungsstrahlenbündels
- 9: Steuerung
- 10: Objektoberfläche
- 11: Sensorgehäuse
- 12: Leiterplatte
- 13: Sockel für Sender- und Empfängerelement
- 14: Sender- und Empfängerelement
- 14': Senderflächen des Sender- und Empfängerelements
- 14'', 14''': Empfangsflächen des Sender- und Empfängerelements
- 15: Tubus
- 16: Fenster- und Linsenelement
- 16', 16'', 16''': Bereiche des Fenster- und Linsenelements
- 17: multifokale Belichtungs-Abbildungslinse
- 17': Bereich der speziellen Linsenanformung zur Fokussierung des Belichtungsstrahlenbündels
- 17'', 17"': außenliegende Bereiche der speziellen Linsenanformung zur Fokussierung des Lichterfassungsbündels beiderseits vom Bereich 17'
- 18: Belichtungsstrahlenbündel dargestellt in seiner kleinsten Ausdehnung und in zentraler Position
- 19: Sammelstrahlenbündel beiderseits der Zone 17'
- 20: Richtung der Relativbewegung zwischen Objekt und Belichtungsfokus
- 21: optische Achse
- 22: vertikale Mittenlinie
- 23: Belichtungsflächen
- 23', 23'': kleinste und größte Belichtungsfläche
- 24: leiterförmiges Abtastraster
- 25: Bild der Senderfläche 14'
- 26: Fensterbereich
- 27: absolute Abtastgeschwindigkeit
- 28: Gehäuse
- 29: Antriebsmotor
- 30: rotierender Hologrammträger mit zwei kreisringförmigen Funktionsbereichen
- 31: Fotoschranke zur Abtastung der Steuerungsgröße
- 32: Empfangsdiode für gestreutes bzw. reflektiertes Licht vom Objekt
- 33: Belichtungsbündel
- 34: Belichtungs- und Sammeloptik
- 35: Lichtteilerspiegel
- 36: Gehäusedeckel mit Befestigung der einzelnen Elemente
- 37: Lichtquelle, zum Beispiel Diodenlaser
- 38: Beispiel eines linearen Belichtungsmusters
- 39: Beispiel eines kreisförmigen Belichtungsmusters
- 40: Lichtquellenarray mit einzel ansteuerbaren Senderelementen, zeilenförmig (senkrecht zur Zeichenfläche) angeordnet
- 41: Belichtungsoptik
- 42: Belichtungsstrahlengang
- 43: Abbildungs- bzw. Empfangsstrahlengang
- 44: Abbildungs-Empfangsoptik
- 45: Empfängerelemente, z.B. Photodioden zeilenförmig (senkrecht zur Zeichenfläche) angeordnet
- 46: Gehäuse
- 47: Richtungspfeil
- 48: resultierendes Belichtungsmuster
- 49, 49': balkenförmigen Lichtflächen gestaffelter Länge
- 50: Senderbaustein mit matrixförmiger Anordnung von Senderelementen
- 51: motorisch angetriebenes Zoom-Objektiv
- 52: Belichtungs- und Abbildungsstrahlengang
- 53: Empfangsbaustein
- 54: Lichtteiler
- 55: Gehäuse
- 56: Belichtungsoptik
- 57: Musterausschnitt
- 58: Abbildungsoptik
- 59: Empfangselementearray
- 60: resultierendes Austastraster
- 61, 61': Senderelementekonfiguration zur Geschwindigkeitsbestimmung
- 62: Bewegungspfeil
- 63: Bewegung der Belichtungskonfiguration zwecks Geschwindigkeitsbestimmung

## Patentansprüche

1. Verfahren zur optischen Detektion von Objekten oder Objektströmen, wie ruhende Objekte oder bewegte Objektströme, deren Oberflächen Licht zu reflektieren oder zu streuen imstande sind, und die selbstaffine oder selbstähnliche oder fraktale Muster oder Strukturen auf den Oberflächen oder in sich aufweisen oder bilden oder hervorrufen können, unter Verwendung einer Belichtungseinrichtung zum Beleuchten der Objekte oder Objektströme und einer optischen Abbildungs- und Empfangseinrichtung mit nachgeschalteter elektronischer Auswertung zum Empfangen und Auswerten des von den Oberflächen reflektierten oder gestreuten, abbildenden Lichtes,
gekennzeichnet durch folgende Merkmale:
a) das Abbildungsstrahlenbündel wird als eine Folge von Lichtmustern ausgetastet, wobei der Austastung ein Ähnlichkeitstransformations-Algorithmus zugrundegelegt wird dergestalt, daß die Verknüpfung der einzelnen Lichtmuster untereinander räumlich und/oder zeitlich eine Skalierung oder Rotation oder Translation von selbstaffin oder selbstähnlich oder fraktal ist und wenigstens zwei Variable eingerichtet werden
b) innerhalb einer jeden Stufe der Skalierung oder Rotation oder Translation erfolgt innerhalb eines Speichers eine Speicherung und Aktualisierung der sich aus der Austastung über die Variablen ergebenden Detektionsereignisse in Gestalt von Wertepaaren
c) über den Variablen der Skalierung oder Rotation oder Translation erfolgt mittels deren Logarithmus die Berechnung der Skalierungs- oder Rotations- oder Translationsfunktion, zum Beispiel ergeben bei zugrundegelegter Skalierung die Wertepaare eine lineare Funktion bei vorhandener Selbstähnlichkeit der Objekte oder Objektströme.

2. Verfahren nach Anspruch 1, dadurch gekennzeichnet,
daß auch das Belichtungsstrahlenbündel mit einer Folge von Lichtmustern moduliert wird, wobei der Modulation gleichermaßen ein Ähnlichkeitstransformations-Algorithmus zugrundegelegt wird dergestalt, daß die Verknüpfung der einzelnen Lichtmuster untereinander räumlich und/oder zeitlich eine Skalierung oder Rotation oder Translation von selbstaffin oder selbstähnlich oder fraktal ist und wenigstens zwei Variable eingerichtet werden, wobei die Modulierung des Belichtungsstrahlenbündels, die Austastung des Abbildungsstrahlenbündels sowie die Ansteuerung des Speichers zur Aufnahme der Wertepaare in gesteuerter Weise mittels einer Steuerung aufeinander abgestimmt werden.

3. Verfahren nach Anspruch 1 oder 2, wobei die Objekte oder Objektströme selbstaffine oder selbstähnliche oder fraktale Muster oder Strukturen auf den Oberflächen oder in sich aufweisen oder bilden oder hervorrufen,
dadurch gekennzeichnet,
daß bei der Austastung des Abbildungsstrahlenbündels und/oder Modulierung des Belichtungsstrahlenbündels die Lichtmuster der erzeugten Folgen bevorzugt skaliert werden und eine Gruppe von Belichtungsflächen (Lichtmusterelemente) umfaßt, die hinsichtlich mindestens einer gemeinsamen Eigenschaft, nämlich räumlich und/oder zeitlich, eine Skalierung von selbstaffinen oder exakt selbstähnlichen oder fraktalen Lichtmustern in der Ebene bilden, wenn ein selbstaffines oder exakt selbstähnliches oder fraktakles Muster oder eine selbstaffine oder exakt selbstähnliche oder fraktale Struktur als Konstante erkannt werden soll.

4. Verfahren nach Anspruch 1 oder 2, dadurch gekennzeichnet,
daß die Lichtmuster (Lichtmusterelemente) aus einer Sequenz von grüßengestuften Quadraten oder Rechtecken besteht.

5. Verfahren nach Anspruch 1 oder 2, dadurch gekennzeichnet,
daß die Lichtmuster (Lichtmusterelemente) aus längengestuften Linien bestehen.

6. Verfahren nach Anspruch 1 oder 2, dadurch gekennzeichnet,
daß die Lichtmuster in Lichtmusterabschnitte verschachtelt sind, wobei bei der Verschachtelung die Skalierungseigenschaft der Lichtmusterelemente erhalten bleibt.

7. Verfahren nach Anspruch 1 und 6, dadurch gekennzeichnet,
daß zur größenabhängigen Geschwindigkeitsbestimmung die verschachtelte Durchstimmung dient, wozu mittels der Steuerung zusätzlich über eine Gruppe verschieden großer Senderflächenaggregate iteriert wird.

8. Verfahren nach Anspruch 1 oder 2, dadurch gekennzeichnet,
daß die Lichtmusterelemente hinsichtlich eines oder mehrerer Skalierungsparameter durchgestimmt bzw. variiert werden.

9. Verfahren nach Anspruch 8, dadurch gekennzeichnet,
daß zum Durchstimmen bzw. Variieren der Skalierungsparameter eine parallele Größendurchstimmung aller zu beleuchtenden Oberflächen periodisch erfolgt, beispielsweise mittels periodisch betriebener Zoomoptiken und darauf abgestimmter Ablichtungszeit.

10. Verfahren nach Anspruch 1 oder 2, dadurch gekennzeichnet,
daß die Selbstähnlichkeit des Lichtmusters (Lichtmusterelemente) von selbstaffin über exakt selbstähnlich bis fraktal durchgestimmt bzw. variiert wird.

11. Verfahren nach Anspruch 10, dadurch gekennzeichnet,
daß die Durchstimmung bzw. Variierung der Selbstähnlichkeit des Lichtmusters mittels einer nichtlinear-bildverzerrenden Zoomoptik erfolgt.

12. Verfahren nach Anspruch 11, dadurch gekennzeichnet,
daß bei der optischen Überlagerung von Lichtmusterelementen und/oder Objektmerkmalen die Anregungs- und Empfangsseite dergestalt strukturiert werden, daß ein oder mehrere Skalierungsparameter kanalbildend gegenseitig zugeordnet werden, beispielsweise bei der Skalierung über Polarisationsgrade oder einer Verfärbungsskala.

13. Verfahren nach Anspruch 1 oder 2, dadurch gekennzeichnet,
daß über die Wertepaare laufend mit jedem neuen Wert der Austastung eine Mittelwertbildung erfolgt.

14. Vorrichtung zur optischen Detektion von Objekten oder Objektströmen, wie ruhende Objekte oder bewegte Objektströme, deren Oberflächen Licht zu reflektieren oder zu streuen imstande sind, und die selbstaffine oder selbstähnliche oder fraktale Muster oder Strukturen auf den Oberflächen oder in sich aufweisen oder bilden oder hervorrufen können, mit einer Beleuchtungseinrichtung zum Beleuchten der Objekte oder Objektströme und einer optischen Abbildungs- und Empfangseinrichtung mit nachgeschalteter elektronischer Auswertung zum Empfangen und Auswerten des von den Oberflächen reflektierten oder gestreuten, abbildenden Lichtes,
gekennzeichnet durch folgende Merkmale:
a) eine optische Einrichtung, die das Abbildungsstrahlenbündel als eine Folge von Lichtmustern auszutasten imstande ist, wobei der Austastung ein Ähnlichkeitstransformations-Algorithmus zugrundeliegt dergestalt, daß die Verknüpfung der einzelnen Lichtmuster untereinander räumlich und/oder zeitlich eine Skalierung oder Rotation oder Translation von selbstaffin oder selbstähnlich oder fraktal ist und wenigstens zwei Variable eingerichtet werden
b) innerhalb einer jeden Stufe der Skalierung oder Rotation oder Translation erfolgt innerhalb eines Speichers eine Speicherung und Aktualisierung der sich aus der Austastung über die Variablen ergebenden Detektionsereignisse in Gestalt von Wertepaaren
c) über den Variablen der Skalierung oder Rotation oder Translation erfolgt mittels deren Logarithmus die Berechnung der Skalierungs- oder Rotations- oder Translationsfunktion, zum Beispiel ergeben bei zugrundegelegter Skalierung die Wertepaare eine lineare Funktion bei vorhandener Selbstähnlichkeit der Objekte oder Objektströme.

15. Vorrichtung nach Anspruch 14, gekennzeichnet durch
eine weitere optische Einrichtung vor dem Objekt oder Objektstrom, die auch das Belichtungsstrahlenbündel mit einer Folge von Lichtmustern zu modulieren imstande ist, wobei der Modulation gleichermaßen ein Ähnlichkeitstransformations-Algorithmus zugrundeliegt dergestalt, daß die Verknüpfung der einzelnen Lichtmuster untereinander räumlich und/oder zeitlich eine Skalierung oder Rotation oder Translation von selbstaffin oder selbstähnlich oder fraktal ist und wenigstens zwei Variable eingerichtet sind, des weiteren eine Steuereinrichtung, die mit den beiden optischen Einrichtungen in steuernder Weise verknüpft ist, wobei die Modulierung des Belichtungslichtbündels, die Austastung des Abbildungsstrahlenbündels sowie die Ansteuerung des Speichers zur Aufnahme der Wertepaare aufeinander abgestimmt sind.

16. Vorrichtung nach Anspruch 14 oder 15, dadurch gekennzeichnet,
daß die optische Einrichtung ein Sender- und Empfängerelement (14) umfaßt, dem ein Fenster- und Linsenelement (16) nachgeordnet ist, unterhalb desselben in Richtung zum Objekt (10) sich eine Belichtungs-Abbildungslinse (17) befindet, wobei die Lichtbündelung auf das Objekt (10) in Kombination mittels des Fenster- und Linsenelementes (16) und der Belichtungs-Abbildungslinse (17) erfolgt.

17. Vorrichtung nach Anspruch 16, dadurch gekennzeichnet,
daß die Belichtungs-Abbildungslinse (17) einen zentralen Bereich (17') einer Linsenanformung zur Fokussierung des Belichtungsstrahlenbündels (18) aufweist, der beiderseits von außenliegenden Bereichen (17'', 17''') umgeben ist zur Fokussierung des Lichterfassungsbündels (19) beiderseits vom zentralen Bereich 17'.

18. Vorrichtung nach Anspruch 14, dadurch gekennzeichnet, daß zur Erzeugung der Folge von Lichtmustern gemäß einer vorgegebenen Skalierung ein motorgetriebener rotierenden Hologrammträger (30) dient, der wenigstens zwei Funktionsbereiche, insbesondere als vorgegebene Durchbrechungen, aufweist und der mittels einer Lichtquelle (37) beleuchtbar ist zur Erzeugung der Belichtungsflächenvariation und -bewegung, wobei die Funktionsbereiche linear oder kreisförmig angeordnet sind, wobei wenigstens ein Funktionsbereich zur Erzeugung eines skalierten Belichtungsstrahlenbündels und wenigstens ein Funktionsbereich zur Erzeugung eines skalierten Abbildungsstrahlenbündels dient.

19. Verfahren nach Anspruch 1 oder 2, dadurch gekennzeichnet, daß die Variablen der Skalierung oder Rotation oder Translation beispielsweise größen- und/oder zeitgestufte Vielecke, Quadrate oder Rechtecke oder Linien oder Winkel oder Farben oder Polarisationsgrade oder elektromagnetische oder akustische Wellenlängen sind.

## Claims

1. Process for the optical detection of objects or object streams such as resting objects or moving object streams whose surfaces are capable of reflecting or scattering light and which can have or form or cause self-affine or self-similar or fractal patterns or structures on the surfaces or within themselves, using a lighting device to illuminate the objects or object streams and an optical imaging and receiving device with a post-connected electronic evaluation unit to receive and evaluate the imaging light that is reflected or scattered from the surfaces,
characterized by the following features:
a) the imaging ray bundle is masked out as a sequence of light patterns, whereby the masking out is based upon a similarity transformation algorithm in such a way that the linking of the individual light patterns among each other spatially and/or temporally is a scaling or rotation or translation from self-affine or self-similar or fractal and at least two variables are established,
b) within each stage of the scaling or rotation or translation, the detection results arising from the masking out are stored and updated in a memory by means of the variables in the form of value pairs,
c) the scaling or rotation or translation function is calculated by means of variables of the scaling or rotation or translation via their logarithm, for example, with the underlying scaling, the value pairs yield a linear function with existing self-similarity of the objects or object streams.

2. Process according to Claim 1, characterized in that
the illumination ray bundle is also modulated with a sequence of light patterns, whereby the modulation is likewise based upon a similarity transformation algorithm in such a way that the linking of the individual light patterns among each other spatially and/or temporally is a scaling or rotation or translation from self-affine or self-similar or fractal and at least two variables are established, whereby the modulation of the illumination ray bundle, the masking out of the imaging ray bundle as well as the actuation of the memory for receiving the value pairs are coordinated with each other in a controlled manner by means of a control.

3. Process according to Claim 1 or 2, whereby the objects or object streams can have or form or cause self-affine or self-similar or fractal patterns or structures on the surfaces or within themselves,
characterized in that,
during the masking out of the imaging ray bundle and/or the modulation of the illumination ray bundle, the light patterns of the generated sequences are preferably scaled and comprise a group of illumination surfaces (light pattern elements) which, with respect to at least one shared property, namely, spatial and/or temporal, form a scaling of self-affine or exactly self-similar or fractal light patterns in the plane when a self-affine or exactly self-similar or fractal pattern or a self-affine or exactly self-similar or fractal structure is to be recognized as the constant.

4. Process according to Claim 1 or 2, characterized in that
the light pattern (light pattern elements) consists of a sequence of squares or rectangles arranged according to size.

5. Process according to Claim 1 or 2, characterized in that
the light patterns (light pattern elements) consist of lines arranged according to length.

6. Process according to Claim 1 or 2, characterized in that
the light patterns are nested in light pattern segments, whereby, in this nesting, the scaling property of the light pattern elements is retained.

7. Process according to Claims 1 and 6, characterized in that
the nested tuning serves to determine the quantity-dependent speed, for which purpose iteration is carried out by means of the control, additionally via a group of different sized transmitter surface aggregates.

8. Process according to Claim 1 or 2, characterized in that
the light pattern elements are tuned or varied with respect to one or more scaling parameters.

9. Process according to Claim 8, characterized in that,
in order to tune or vary the scaling parameters, a parallel quantity tuning of all of the surfaces to be illuminated is performed periodically, for example, by means of periodically operated zoom lenses and an exposure time coordinated with this.

10. Process according to Claim 1 or 2, characterized in that
the self-similarity of the light pattern (light pattern elements) is tuned or varied from self-affine to exactly self-similar to fractal.

11. Process according to Claim 10, characterized in that
the tuning or variation of the self-similarity of the light pattern is carried out by means of a non-linear image-distorting zoom lens.

12. Process according to Claim 11, characterized in that,
with the optical superimposition of light pattern elements and/or object characteristics, the excitation side and the receiving side are structured in such a way one or more scaling parameters are associated with each other so as to form a channel, for example, in the scaling by means of degrees of polarization or a discoloration scale.

13. Process according to Claim 1 or 2, characterized in that,
via the value pairs, a mean value is generated continuously with each new value of the masking out.

14. Device for the optical detection of objects or object streams such as resting objects or moving object streams whose surfaces are capable of reflecting or scattering light and that can have or form or cause self-affine or self-similar or fractal patterns or structures on the surfaces or within themselves, using a lighting device to illuminate the objects or object streams and an optical imaging and receiving device with a post-connected electronic evaluation unit to receive and evaluate the imaging light that is reflected or scattered from the surfaces,
characterized by the following features:
a) an optical device that is capable of masking out the imaging ray bundle as a sequence of light patterns, whereby the masking out is based upon a similarity transformation algorithm in such a way that the linking of the individual light patterns among each other spatially and/or temporally is a scaling or rotation or translation from self-affine or self-similar or fractal and at least two variables are established,
b) within each stage of the scaling or rotation or translation, the detection results arising from the masking out are stored and updated in a memory by means of the variables in the form of value pairs,
c) the scaling or rotation or translation function is calculated by means of variables of the scaling or rotation or translation via their logarithm, for example, with the underlying scaling, the value pairs yield a linear function with existing self-similarity of the objects or object streams.

15. Device according to Claim 14, characterized by
another optical device in front of the object or object stream which is also capable of modulating the illumination ray bundle with a sequence of light patterns, whereby the modulation is likewise based upon a similarity transformation algorithm in such a way that the linking of the individual light patterns among each other spatially and/or temporally is a scaling or rotation or translation from self-affine or self-similar or fractal and at least two variables are established, moreover, a control device that is linked with the two optical devices in a controlling manner, whereby the modulation of the illumination ray bundle, the masking out of the imaging ray bundle as well as the actuation of the memory for receiving the value pairs are coordinated with each other.

16. Device according to Claim 14 or 15, characterized in that
the optical device comprises a transmitter element and a receiver element (14) that is followed by a window and lens element (16), below which, in the direction towards the object (10), there is an illumination-imaging lens (17), whereby the light is bundled onto the object (10) in combination by means of the window and lens element (16) and the illumination-imaging lens (17).

17. Device according to Claim 16, characterized in that
the illumination-imaging lens (17) has a central area (17') of a lens shaping for focusing the illumination ray bundle (18) that is surrounded on both sides by external areas (17'' 17''') for focusing the light detection bundle (19) on both sides of the central area (17').

18. Device according to Claim 14, characterized in that
a motor-driven, rotating hologram support (30) serves to generate the sequence of light patterns according to a prescribed scaling, whereby said hologram support (30) has at least two function areas, especially as predefined openings, and can be illuminated by means of a light source (37) for generating the illumination surface variation and movement, whereby the function areas are arranged linearly or circularly, whereby at least one function area serves to generate a scaled illumination ray bundle and at least one function area serves to generate a scaled imaging ray bundle.

19. Process according to Claim 1 or 2, characterized in that
the variables of the scaling or rotation or translation are, for example, polygons, squares or rectangles or lines or angles or colors or degrees of polarization or electromagnetic or acoustic wavelengths that are arranged according to size and/or time.

## Revendications

1. Procédé pour la détection optique d'objets ou de flux d'objets tels des objets immobiles ou des flux d'objets en mouvement dont les surfaces sont en mesure de refléter ou de diffuser la lumière et qui peuvent présenter ou former ou engendrer sur leurs surfaces ou en eux mêmes des motifs ou des structures autoaffines ou autoressemblants ou fractaux, en utilisant un dispositif d'exposition pour l'éclairage des objets ou des flux d'objets et un dispositif de reproduction et de réception optiques avec une unité d'analyse électronique placée en aval qui reçoit et analyse la lumière refletée ou diffusée par les surfaces et formant l'image,
caractérisé par les caractéristiques suivantes:
a) le faisceau de rayons de reproduction est balayé en tant que séquence de motifs lumineux, ce balayage étant basé sur un algorithme de transformation de similitude de façon à ce que la liaison des motifs lumineux entre eux dans l'espace et/ou dans le temps est une échelle ou une rotation ou translation d'autoaffine ou d'autoressemblant ou de fractal et qu'au moins deux variables sont instaurées
b) dans chaque échelon de l'échelle ou de la rotation ou translation, les événements de détection résultant du balayage par l'intermédiaire des variables sont stockés et mis à jour dans une mémoire sous forme de paires de valeurs
c) par l'intermédiaire des variables de l'échelle ou de la rotation ou translation, on calcule la fonction d'échelle ou de rotation ou translation à l'aide de leur logarithme, par exemple, en prenant pour base l'échelle, les paires de valeurs donnent une fonction linéaire lorsque les objets ou flux d'objets sont autoressemblants.

2. Procédé selon la revendication 1, caractérisé en ce que
le faisceau de rayons d'exposition, lui aussi, est modulé avec une séquence de motifs lumineux, la modulation étant basée elle aussi sur un algorithme de transformation de similitude de façon à ce que la liaison des motifs lumineux entre eux constitue dans l'espace et/ou dans le temps une échelle ou rotation ou translation d'autoaffine ou d'autoressemblant ou de fractal et qu'au moins deux variables soient instaurées, la modulation du faisceau de rayons d'exposition, le balayage du faisceau de rayons de reproduction ainsi que l'accès à la mémoire pour l'enregistrement des paires de valeurs étant adaptés l'un à l'autre de façon réglée au moyen d'une commande.

3. Procédé selon la revendication 1 ou 2, dans lequel les objets ou flux d'objets présentent ou forment ou engendrent sur leurs surfaces ou en eux-mêmes des motifs ou structures autoaffines ou autoressemblants ou fractaux,
caractérisé en ce que
lors du balayage du faisceau de rayons de reproduction et/ou de la modulation du faisceau de rayons d'exposition, les motifs lumineux des séquences générées sont de préférence mis à échelle et comprennent un groupe de surfaces d'exposition (éléments de motifs lumineux) qui, au moins en ce qui concerne une caractéristique commune, à savoir dans l'espase et/ou dans le temps, forment une échelle de motifs lumineux autoaffines ou exactement autoressemblants ou fractaux dans un plan, lorsqu'un motif autoaffine ou exactement autoressemblant ou fractal ou une structure autoaffine ou exactement autoressemblante ou fractale doit être reconnu en tant que constante.

4. Procédé selon la revendication 1 ou 2, caractérisé en ce que
les motif lumineux (éléments de motifs lumineux) consistent en une séquence de carrés ou de rectangles échelonnés suivant la grandeur.

5. Procédé selon la revendication 1 ou 2, caractérisé en ce que
les motifs lumineux (éléments de motifs lumineux) consistent en lignes échelonnées suivant leur longueur.

6. Procédé selon la revendication 1 ou 2, caractérisé en ce que
les motifs lumineux sont entrelacés de façon à former des sections de motifs lumineux, la caractéristique d'échelle des éléments de motifs lumineux restant maintenue lors de cet entrelacement.

7. Procédé suivant les revendications 1 et 6, caractérisé en ce que
la détermination de la vitesse en fonction de la grandeur s'effectue par la variation entrelacée, en itérant de plus par l'intermédiaire d'un groupe d'agrégats de surfaces émettrices de différentes dimensions à l'aide de la commande.

8. Procédé selon la revendication 1 ou 2, caractérisé en ce que
les éléments de motifs lumineux sont fait systématiquement varier en ce qui concerne un ou plusieurs paramètres d'échelle.

9. Procédé selon la revendication 8, caractérisé en ce que
pour la variation des paramètres d'échelle, on procède périodiquement à une variation parallèle des dimensions de toutes les surfaces à éclairer, par exemple au moyen d'optiques zoom et du temps d'exposition y accordé.

10. Procédé selon la revendication 1 ou 2, caractérisé en ce que
l'autoressemblance du motif lumineux (éléments de motif lumineux) est fait varier d'autoaffine jusqu'à fractal en passant par exactement autoressemblant.

11. Procédé selon la revendication 10, caractérisé en ce que
la variation de l'autoressemblance du motif lumineux s'effectue à l'aide d'une optique zoom à déformation non linéaire de l'image.

12. Procédé selon la revendication 11, caractérisé en ce que,
lors de la superposition optique d'éléments de motifs lumineux et/ou de caractéristiques de l'objet, les côtés excitation et réception sont structurés de sorte qu'un ou plusieurs paramètres d'échelle sont affectés l'un à l'autre en formant des canaux, par exemple lors de la mise à échelle par l'intermédiaire de degrés de polarisation ou d'une échelle de changement de couleur.

13. Procédé selon la revendication 1 ou 2, caractérisé en ce que,
par l'intermédiaire des paires de valeurs, on procède constamment à la formation d'une valeur moyenne avec chaque nouvelle valeur du balayage.

14. Dispositif pour la détection optique d'objets ou de flux d'objets tels que des objets immobiles ou des flux d'objets en mouvement dont les surfaces sont en mesure de refléter ou de diffuser la lumière et qui peuvent présenter ou former ou engendrer sur leurs surfaces ou en eux mêmes des motifs ou des structures autoaffines ou autoressemblants ou fractaux en utilisant un dispositif d'exposition pour l'éclairage des objets ou des flux d'objets et un dispositif de reproduction et de réception optiques avec une unité d'analyse électronique placée en aval qui reçoit et analyse la lumière reflétée ou diffusée par les surfaces et formant l'image,
caractérisé par les caractéristiques suivantes:
a) une unité optique qui est en mesure de balayer le faisceau de rayons de reproduction en tant que séquence de motifs lumineux, ce balayage étant basé sur un algorithme de transformation de similitude de façon à ce que la liaison des motifs lumineux entre eux dans l'espace et/ou dans le temps constitue une échelle ou une rotation ou translation d'autoaffine ou d'autoressemblant ou de fractal et qu'au moins deux variables sont instaurées
b) dans chaque échelon de l'échelle ou de la rotation ou translation, les événements de détection résultant du balayage par l'intermédiaire des variables sont stockés et mis à jour dans une mémoire sous forme de paires de valeurs
c) par l'intermédiaire des variables de l'échelle ou de la rotation ou translation, on calcule la fonction d'échelle ou de rotation ou translation à l'aide de leur logarithme, par exemple, en prenant pour base l'échelle, les paires de valeurs donnent une fonction linéaire lorsque les objets ou flux d'objets sont auroressemblants.

15. Dispositif selon la revendication 14, caractérisé en ce
qu'il comprend une autre unité optique devant l'objet ou le flux d'objets qui est en mesure de moduler le faisceau de rayons d'exposition, lui aussi, avec une séquence de motifs lumineux, la modulation étant basée elle aussi sur un algorithme de transformation de similitude de façon à ce que la liaison des motifs lumineux entre eux constitue dans l'espace ou dans le temps une échelle ou rotation ou translation d'autoaffine ou d'autoressemblant ou de fractal et qu'au moins deux variables soient instaurées, et qu'il comprend de plus une unité de commande qui est associée aux deux unités optiques, la modulation du faisceau lumineux d'exposition, le balayage du faisceau de rayons de reproduction ainsi que l'accès à la mémoire pour l'enregistrement des paires de valeurs étant adaptés l'un à l'autre.

16. Dispositif selon la revendication 14 ou 15, caractérisé en ce que
l'unité optique comprend un élément d'émission et de réception (14) avec en aval un élément à fenêtre et à lentille (16), en dessous duquel, en direction de l'objet (10) se trouve une lentille d'exposition et de reproduction (17), la focalisation de la lumière sur l'objet (10) s'effectuant en combinaison à l'aide de l'élément à fenêtre et à lentille (16) et de la lentille d'exposition et de reproduction (17).

17. Dispositif selon la revendication 16, caractérisé en ce que
la lentille d'exposition et de reproduction (17) présente une zone centrale (17') pour la focalisation du faisceau de rayons d'exposition (18) qui de part et d'autre est entourée de zones extérieures (17'', 17''') pour la focalisation du faisceau lumineux reflété (19) de part et d'autre de la zone centrale (17').

18. Dispositif selon la revendication 14, caractérisé en ce que
la génération de la séquence de motifs lumineux selon une échelle prédéterminée s'effectue à l'aide d'un support holographique (30) rotatif entraîné par moteur qui présente au moins deux zones fonctionnelles, notamment en tant que percements prédéterminés, et qui peut être éclairé par une source lumineuse (37) pour engendrer la variation et le mouvement de la surface d'exposition, lesdites zones fonctionnelles étant disposées de façon linéaire ou circulaire, au moins l'une des zones fonctionnelles servant à la génération d'un faisceau de rayons d'exposition mis à échelle et au moins l'une de ces zones fonctionnelles servant à la génération d'un faisceau de rayons de reproduction mis à échelle.

19. Procédé selon la revendication 1 ou 2, caractérisé en ce que
les variables de l'échelle ou de la rotation ou translation constituent par exemple des polygones, des carrés ou des rectangles échelonnés suivant la grandeur et/ou le temps, ou des lignes ou angles ou couleurs ou degrés de polarisation ou encore des longueurs d'ondes électromagnétiques ou acoustiques.
